# EUROPÄISCHE PATENTSCHRIFT

(11) **EP 4 105 705 B1**
(45) Veröffentlichungstag und Bekanntmachung des Hinweises auf die Patenterteilung: **09.12.2026**
(21) Anmeldenummer: 22181488.2
(22) Anmeldetag: 02.03.2018
(51) Int. Cl.: G01N 21/41, G02B 21/08, G02B 21/14, G02B 21/36, G06V 10/141, G06V 10/774, G06V 10/82

(54) **MICROSCOPE ILLUMINATION GEOMETRY DETERMINED BASED ON CLASSIFICATION OF A SAMPLE**
BESTIMMUNG DER BELEUCHTUNGSGEOMETRIE EINES MIKROSKOPS BASIEREND AUF DER KLASSIFIKATION EINER PROBE
DETERMINATION DE LA GÉOMÉTRIE D'ÉCLAIRAGE D'UN MICROSCOPE BASÉE SUR LA CLASSIFICATION D'UN ÉCHANTILLON

(30) Priorität: 31.03.2017 DE 102017106984
(43) Veröffentlichungstag der Anmeldung: 21.12.2022
(62) Dokumentnummer(n) der früheren Anmeldung(en) nach Art. 76 EPÜ: 18712089.4 / 3 602 163
(73) Patentinhaber: Carl Zeiss Microscopy GmbH, 07745 Jena (DE)
(72) Erfinder: DIEDERICH, Benedict, 07749 Jena (DE); WARTMANN, Rolf, 37136 Waake (DE); SCHADWINKEL, Harald, 30161 Hannover (DE); STOPPE, Lars, 07743 Jena (DE)
(74) Vertreter: Kraus & Lederer PartGmbB

(56) Entgegenhaltungen:
- US-A1- 2004 246 479
- US-A1- 2014 118 525
- GEERT LITJENS ET AL: "A Survey on Deep Learning in Medical Image Analysis", ARXIV.ORG, CORNELL UNIVERSITY LIBRARY, 201 OLIN LIBRARY CORNELL UNIVERSITY ITHACA, NY 14853, 19 February 2017 (2017-02-19), XP080747655, DOI: 10.1016/J.MEDIA.2017.07.005
- CHRISTOPH SOMMER ET AL: "Machine learning in cell biology - teaching computers to recognize phenotypes", JOURNAL OF CELL SCIENCE, vol. 126, no. 24, 15 December 2013 (2013-12-15), GB, pages 5529 - 5539, XP055518809, ISSN: 0021-9533, DOI: 10.1242/jcs.123604

## Beschreibung

### TECHNISCHES GEBIET

Verschiedene Beispiele der Erfindung betreffen im Allgemeinen die strukturierte Beleuchtung eines Probenobjekts bei der Bilderfassung. Verschiedene Beispiele der Erfindung betreffen insbesondere das Bestimmen von bevorzugten Beleuchtungsgeometrien der strukturierten Beleuchtung.

### HINTERGRUND

In der optischen Bildgebung von Probenobjekten kann es häufig erstrebenswert sein, ein sogenanntes Phasenkontrastbild des Probenobjekts zu erzeugen. In einem Phasenkontrastbild ist zumindest ein Teil des Bildkontrasts durch eine Phasenverschiebung des Lichts durch das abgebildete Probenobjekt bedingt. Damit können insbesondere solche Probenobjekte mit vergleichsweise hohem Kontrast abgebildet werden, die keine oder nur eine geringe Schwächung der Amplitude bewirken, jedoch eine signifikante Phasenverschiebung; solche Probenobjekte werden oftmals auch als Phasenobjekte (engl. phase object) bezeichnet. Typischerweise können biologische Proben als Probenobjekt in einem Mikroskop eine vergleichsweise größere Phasenänderung als Amplitudenänderung des elektromagnetischen Felds bewirken.

Es sind verschiedene Techniken zur Phasenkontrast-Bildgebung bekannt, etwa die Dunkelfeldbeleuchtung, die schiefe Beleuchtung, der differenzielle Interferenzkontrast (DIC) oder auch der Zernike-Phasenkontrast.

Solche vorgenannten Techniken weisen diverse Nachteile oder Einschränkungen auf. Oftmals kann es erforderlich sein, zusätzliche optische Elemente zwischen Probe und Detektor im Bereich der sogenannten Detektionsoptik bereitzustellen, um die Phasenkontrast-Bildgebung zu ermöglichen. Daraus können konstruktive Einschränkungen resultieren.

Es sind auch Techniken bekannt, bei denen mittels strukturierter Beleuchtung ein Phasenkontrast erzielt werden kann. Siehe beispielsweise DE 10 2014 112 242 A1 oder US 9,507,138 B2 oder L. Tian und L. Waller: "Quantitative differential phase contrast imaging in an LED array microscope", Optics Express 23 (2015), 11394. Weitere verwandte Techniken sind offenbart in US 2004/246479 A1, US 2014/118525 A1, Litjiens et al., "A Survey on Deep Learning in Medical Image Analysis", Arxiv.org, Cornell University Library (2017), sowie Sommer et al., "Machine learning in cell biology - teaching computers to recognize phenotypes", J. Cell Sci. 2013, 126(24), 5529-5539.

Jedoch weisen auch solche vorgenannten Techniken bestimmte Einschränkungen auf. Beispielsweise kann der mittels fix definierten Beleuchtungsgeometrien erzielbare Phasenkontrast vergleichsweise limitiert sein.

### KURZE BESCHREIBUNG DER ERFINDUNG

Deshalb besteht ein Bedarf für verbesserte Techniken zur Bildgebung eines Probenobjekts mittels strukturierter Beleuchtung. Insbesondere besteht ein Bedarf für solche Techniken, die zumindest einige der vorgenannten Einschränkungen und Nachteile lindern oder beheben.

Diese Aufgabe wird von den Merkmalen der unabhängigen Patentansprüche gelöst. Die Merkmale der abhängigen Patentansprüche definieren Ausführungsformen.

Ein Verfahren (nicht erfindungsgemäß) umfasst das Bestimmen einer Objektübertragungsfunktion (manchmal auch als Objekttransmissionsfunktion bezeichnet; engl. object transfer function) für ein Probenobjekt. Dabei wird die Objektübertragungsfunktion basierend auf einer Referenzmessung bestimmt. Das Verfahren umfasst auch das Durchführen einer Optimierung zum Auffinden einer optimierten Beleuchtungsgeometrie basierend auf der Objektübertragungsfunktion sowie ferner basierend auf einer Optikübertragungsfunktion für eine Optik. Das Verfahren umfasst auch das Ansteuern mindestens eines Beleuchtungsmoduls zum Beleuchten eines Probenobjekts mit der optimierten Beleuchtungsgeometrie und mittels der Optik. Das Verfahren könnte optional das Ansteuern mindestens eines Detektors zum Erfassen eines Bilds des Probenobjekts mittels der Optik umfassen, wobei das Bild mit der optimierten Beleuchtungsgeometrie assoziiert ist.

Mittels des Durchführens der Optimierung zum Auffinden der optimierten Beleuchtungsgeometrie ist es möglich, einen großen Suchraum auch für Beleuchtungsmodule mit vielen Freiheitsgraden - beispielsweise mit vielen verstellbaren Beleuchtungselementen - effizient zu durchsuchen. Beispielsweise kann die Optimierung rein rechnergestützt durchgeführt werden. d. h. ohne die Notwendigkeit auch Messdaten während dem Durchführen der Optimierung zu berücksichtigen. Dies ermöglicht es, die Optimierung besonders zügig durchzuführen. Dann kann die optimierte Beleuchtungsgeometrie einen besonders großen Phasenkontrast oder die Erfüllung eines anderweitig definierten Optimierungskriteriums in dem mit der optimierten Beleuchtungsgeometrie assoziierten Bild für das Probenobjekt bewirken. Dabei kann es entbehrlich sein, weitere Nachbearbeitungsschritte des mit der optimierten Beleuchtungsgeometrie erfassten Bilds durchzuführen, wie beispielsweise Kombination mit weiteren Bildern die mit einer anderen Beleuchtungsgeometrie assoziiert wären. Daher kann es insbesondere möglich sein, das Probenobjekt durch ein Okular zu betrachten und bereits den Phasenkontrast abzubilden, beispielsweise ohne weitere digitale Nachbearbeitung.

Ein Computerprogrammprodukt (nicht erfindungsgemäß) umfasst Steueranweisungen, die von mindestens einem Prozessor ausgeführt werden können. Ausführen der Steueranweisungen bewirkt, dass der Prozessor ein Verfahren durchführt. Das Verfahren umfasst das Bestimmen einer Objektübertragungsfunktion für ein Probenobjekt. Dabei wird die Objektübertragungsfunktion basierend auf einer Referenzmessung bestimmt. Das Verfahren umfasst auch das Durchführen einer Optimierung zum Auffinden einer optimierten Beleuchtungsgeometrie basierend auf der Objektübertragungsfunktion sowie ferner basierend auf einer Optikübertragungsfunktion für eine Optik. Das Verfahren umfasst auch das Ansteuern mindestens eines Beleuchtungsmoduls zum Beleuchten eines Probenobjekts mit der optimierten Beleuchtungsgeometrie und mittels der Optik. Das Verfahren könnte optional das Ansteuern mindestens eines Detektors zum Erfassen eines Bilds des Probenobjekts mittels der Optik umfassen, wobei das Bild mit der optimierten Beleuchtungsgeometrie assoziiert ist.

Ein Computerprogramm (nicht erfindungsgemäß) umfasst Steueranweisungen, die von mindestens einem Prozessor ausgeführt werden können. Ausführen der Steueranweisungen bewirkt, dass der Prozessor ein Verfahren durchführt. Das Verfahren umfasst das Bestimmen einer Objektübertragungsfunktion für ein Probenobjekt. Dabei wird die Objektübertragungsfunktion basierend auf einer Referenzmessung bestimmt. Das Verfahren umfasst auch das Durchführen einer Optimierung zum Auffinden einer optimierten Beleuchtungsgeometrie basierend auf der Objektübertragungsfunktion sowie ferner basierend auf einer Optikübertragungsfunktion für eine Optik. Das Verfahren umfasst auch das Ansteuern mindestens eines Beleuchtungsmoduls zum Beleuchten eines Probenobjekts mit der optimierten Beleuchtungsgeometrie und mittels der Optik. Das Verfahren könnte optional das Ansteuern mindestens eines Detektors zum Erfassen eines Bilds des Probenobjekts mittels der Optik umfassen, wobei das Bild mit der optimierten Beleuchtungsgeometrie assoziiert ist.

Eine Steuerung (nicht erfindungsgemäß) umfasst mindestens einem Prozessor. Der mindestens eine Prozessor ist eingerichtet, um die folgenden Schritte durchzuführen: basierend auf einer Referenzmessung: Bestimmen einer Objektübertragungsfunktion für ein Probenobjekt; und basierend auf der Objektübertragungsfunktion und ferner basierend auf einer Optikübertragungsfunktion für eine Optik: Durchführen einer Optimierung zum Auffinden einer optimierten Beleuchtungsgeometrie; und Ansteuern mindestens eines Beleuchtungsmoduls zum Beleuchten des Probenobjekts mit der optimierten Beleuchtungsgeometrie und mittels der Optik.

Ein Verfahren gemäß Anspruch 1 umfasst das Erfassen eines Referenzbilds eines Probenobjekts. Das Verfahren umfasst auch das Klassifizieren des Probenobjekts mit einem künstlichen neuronalen Netzwerk (KNN; engl. artificial neural networks) basierend auf dem Referenzbild. Das Verfahren umfasst weiterhin das Bestimmen einer Beleuchtungsgeometrie basierend auf dem Klassifizieren sowie das Ansteuern mindestens einen Beleuchtungsmoduls zum Beleuchten des Probenobjekts mit der bestimmten Beleuchtungsgeometrie. Das Verfahren könnte weiterhin das Ansteuern mindestens einen Detektors zum Erfassen eines Bilds des Probenobjekts umfassen, wobei das Bild des Probenobjekts mit der bestimmten Beleuchtungsgeometrie assoziiert ist.

KNNs ermöglichen es, besonders effizient und zügig eine geeignet trainierte Klassifikation des Probenobjekts auf Grundlage des Referenzbilds durchzuführen. Es wurde beobachtet, dass mittels einer solchen Klassifikation die geeignete Beleuchtungsgeometrie besonders zügig bestimmt werden kann. Dies kann insbesondere Echtzeitanwendungen fördern. Durch die Skalierbarkeit der durch KNNs abgebildeten Komplexität beim Klassifizieren von Merkmalen und Strukturen des Probenobjekts kann auch ein besonders großer Suchraum - beispielsweise für unterschiedliche Typen von Probenobjekten - mittels solcher Techniken abgedeckt werden.

Ein Computerprogrammprodukt (nicht erfindungsgemäß) umfasst Steueranweisungen, die von mindestens einem Prozessor ausgeführt werden können. Ausführen der Steueranweisungen bewirkt, dass der Prozessor ein Verfahren durchführt. Das Verfahren umfasst das Erfassen eines Referenzbilds eines Probenobjekts. Das Verfahren umfasst auch das Klassifizieren des Probenobjekts mit einem KNN basierend auf dem Referenzbild. Das Verfahren umfasst weiterhin das Bestimmen einer Beleuchtungsgeometrie basierend auf dem Klassifizieren sowie das Ansteuern mindestens einen Beleuchtungsmoduls zum Beleuchten des Probenobjekts mit der bestimmten Beleuchtungsgeometrie. Das Verfahren könnte weiterhin das Ansteuern mindestens einen Detektors zum Erfassen eines Bilds des Probenobjekts umfassen, wobei das Bild des Probenobjekts mit der bestimmten Beleuchtungsgeometrie assoziiert ist.

Ein Computerprogramm (nicht erfindungsgemäß) umfasst Steueranweisungen, die von mindestens einem Prozessor ausgeführt werden können. Ausführen der Steueranweisungen bewirkt, dass der Prozessor ein Verfahren durchführt. Das Verfahren umfasst das Erfassen eines Referenzbilds eines Probenobjekts. Das Verfahren umfasst auch das Klassifizieren des Probenobjekts mit einem KNN basierend auf dem Referenzbild. Das Verfahren umfasst weiterhin das Bestimmen einer Beleuchtungsgeometrie basierend auf dem Klassifizieren sowie das Ansteuern mindestens einen Beleuchtungsmoduls zum Beleuchten des Probenobjekts mit der bestimmten Beleuchtungsgeometrie. Das Verfahren könnte weiterhin das Ansteuern mindestens einen Detektors zum Erfassen eines Bilds des Probenobjekts umfassen, wobei das Bild des Probenobjekts mit der bestimmten Beleuchtungsgeometrie assoziiert ist.

Eine Steuerung nach Anspruch 5 umfasst mindestens einem Prozessor. Der mindestens eine Prozessor ist eingerichtet, um die folgenden Schritte durchzuführen: Erfassen eines Referenzbilds eines Probenobjekts; und Klassifizieren des Probenobjekts mit einem künstlichen neuronalem Netzwerk basierend auf dem Referenzbild; und Bestimmen einer Beleuchtungsgeometrie basierend auf dem Klassifizieren; und Ansteuern mindestens eines Beleuchtungsmoduls zum Beleuchten des Probenobjekts mit der bestimmten Beleuchtungsgeometrie.

Ein Verfahren (nicht erfindungsgemäß) umfasst das Klassifizieren des Probenobjekts. Dann kann basierend auf dem Klassifizieren auf eine Datenbank zugegriffen werden, um eine Beleuchtungsgeometrie zu ermitteln. Das Verfahren umfasst weiterhin das Ansteuern mindestens eines Beleuchtungsmoduls zum Beleuchten eines Probenobjekts mit der bestimmten Beleuchtungsgeometrie.

Beispielsweise wäre es möglich, dass das Klassifizieren des Probenobjekts manuell erfolgt. Beispielsweise könnte ein Typ des Probenobjekts, beispielsweise biologische Probe, Trinkwasser, Bakterien etc. manuell klassifiziert werden. Dann wäre es möglich, dass entsprechende vorbestimmte Einträge der Datenbank eine Verknüpfung zwischen entsprechend klassifizierten Probenobjekten und geeigneten Beleuchtungsgeometrien bereitstellen. Eine solche Technik kann insbesondere für bestimmte Routineaufgaben, die häufig die Bildgebung von gleichen Typen von Probenobjekten erfordern, eine besonders genaue und schnelle Bestimmung der geeigneten Beleuchtungsgeometrie ermöglichen.

Ein Computerprogrammprodukt (nicht erfindungsgemäß) umfasst Steueranweisungen, die von mindestens einem Prozessor ausgeführt werden können. Ausführen der Steueranweisungen bewirkt, dass der Prozessor ein Verfahren durchführt. Das Verfahren umfasst das Klassifizieren des Probenobjekts. Dann kann basierend auf dem Klassifizieren auf eine Datenbank zugegriffen werden, um eine Beleuchtungsgeometrie zu ermitteln. Das Verfahren umfasst weiterhin das Ansteuern mindestens eines Beleuchtungsmoduls zum Beleuchten eines Probenobjekts mit der bestimmten Beleuchtungsgeometrie sowie optional das Ansteuern mindestens einen Detektors zum Erfassen eins Bilds des Probenobjekts, welches mit der Beleuchtungsgeometrie assoziiert ist.

Ein Computerprogramm (nicht erfindungsgemäß) umfasst Steueranweisungen, die von mindestens einem Prozessor ausgeführt werden können. Ausführen der Steueranweisungen bewirkt, dass der Prozessor ein Verfahren durchführt. Das Verfahren umfasst das Klassifizieren des Probenobjekts. Dann kann basierend auf dem Klassifizieren auf eine Datenbank zugegriffen werden, um eine Beleuchtungsgeometrie zu ermitteln. Das Verfahren umfasst weiterhin das Ansteuern mindestens eines Beleuchtungsmoduls zum Beleuchten eines Probenobjekts mit der bestimmten Beleuchtungsgeometrie sowie optional das Ansteuern mindestens einen Detektors zum Erfassen eins Bilds des Probenobjekts, welches mit der Beleuchtungsgeometrie assoziiert ist.

Eine Steuerung (nicht erfindungsgemäß) umfasst mindestens einen Prozessor. Der mindestens eine Prozessor ist eingerichtet, um die folgenden Schritte durchzuführen: Klassifizieren eines Probenobjekts; und basierend auf dem Klassifizieren: Zugreifen auf eine Datenbank zum Ermitteln einer Beleuchtungsgeometrie; und Ansteuern mindestens eines Beleuchtungsmoduls zum Beleuchten des Probenobjekts mit der bestimmten Beleuchtungsgeometrie; und optional Ansteuern mindestens eines Detektors zum Erfassen eines Bilds des Probenobjekts, das mit der Beleuchtungsgeometrie assoziiert ist.

Die oben dargelegten Merkmale sowie Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

FIG. 1 illustriert schematisch ein optisches System mit einem Beleuchtungsmodul, das zur strukturierten Beleuchtung eines von einem Probenhalter fixierten Probenobjekts gemäß verschiedener Beispiele eingerichtet ist.
FIG. 2 illustriert schematisch das Beleuchtungsmodul in größerem Detail, wobei das Beleuchtungsmodul gemäß verschiedener Beispiele eine Matrix von einstellbaren Beleuchtungselementen umfasst.
FIG. 3 illustriert schematisch eine beispielhafte Beleuchtungsgeometrie für das Beleuchtungsmodul gemäß FIG. 2.
FIG. 4 illustriert schematisch Aspekte in Bezug auf das Durchführen eine Optimierung zum Auffinden einer optimierten Beleuchtungsgeometrie.
FIG. 5 ist ein Flussdiagramm eines beispielhaften Verfahrens (nicht erfindungsgemäß).
FIG. 6 ist ein Flussdiagramm eines beispielhaften Verfahrens (nicht erfindungsgemäß).
FIG. 7 ist ein Flussdiagramm eines beispielhaften Verfahrens.
FIG. 8 illustriert schematisch eine beispielhafte Beleuchtungsgeometrie, die gemäß verschiedener Beispiele basierend auf einer gewichteten Überlagerung verschiedener Anteile einer Polynom-Reihenentwicklung bestimmt wird.
FIG. 9 ist ein Flussdiagramm eines beispielhaften Verfahrens.
FIG. 10 ist ein Flussdiagramm eines beispielhaften Verfahrens (nicht erfindungsgemäß).

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegebene, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementier sein. Funktionale Einheiten können als Hardware, Software oder eine Kombination aus Hardware und Software implementiert werden.

Nachfolgend werden Techniken zur Phasenkontrast-Bildgebung beschrieben. Der Einfluss der Beleuchtungsgeometrie auf die Bildentstehung und Kontrastverfahren im Lichtmikroskop wurde schon 1866 von Ernst Abbe formuliert. Basierend auf den Gesetzen der partiell-kohärenten Abbildung werden hierin beschriebene Techniken beschrieben, für ein Hellfeld-Mikroskop unsichtbare Phasenobjekte, wie Zellen und Fasern, durch digitale Kontrastverfahren kontrastreich abzubilden.

Weit verbreitete Verfahren, wie das Zernike Phasenkontrast Verfahren oder Differentieller Interferenz Kontrast (DIK), erlauben es, unter Verwendung spezifischer Optiken die Objektphase abzubilden. Die hierin beschriebenen Techniken ermöglichen es, ohne modifizierte Linsen auszukommen und Phasenobjekte direkt beim Blick durch das Okular in Echtzeit sichtbar zu machen. Dazu wird eine besonders geeignete Beleuchtungsgeometrie zur Beleuchtung des Probenobjekts verwendet.

Verschiedene hierin beschriebene Beispiele beruhen auf der Erkenntnis, dass bei typischen Anwendungen, wie beispielsweise der Mikroskopie, eine a-priori Information über das Probenobjekt oftmals nicht verfügbar ist. Dies ist der Fall, weil oftmals die Bildgebung von unbekannten Probenobjekten angestrebt wird. Dies bedeutet, dass beispielsweise im Gegensatz zu Techniken der Lithographie keine a-priori Information über das Probenobjekt (im Fall der Lithographie die wohlbekannte Maske) vorliegt. Die verschiedenen hierin beschriebenen Beispiele ermöglichen es dennoch, eine geeignete Beleuchtungsgeometrie für das Probenobjekt aufzufinden.

In manchen Beispielen (nicht erfindungsgemäß) wird dabei basierend auf einer Referenzmessung eine Objektübertragungsfunktion für das Probenobjekt bestimmt. Die Objektübertragungsfunktion kann beispielsweise den Einfluss des Probenobjekts auf von einem Beleuchtungsmodul einfallendes Licht beschreiben. Der Einfluss der Optik zur Abbildung wird durch eine Optikübertragungsfunktion beschrieben.

Dabei sind unterschiedliche Techniken zum Bestimmen der Objektübertragungsfunktion und/oder der Optikübertragungsfunktion möglich. Ein beliebiges Probenobjekt, repräsentiert durch eine zweidimensionale Objektübertragungsfunktion *t(x, y),* lässt sich mittels Fourierzerlegung in seine unterschiedlichen Ortsfrequenzen aufteilen. Somit ist jedes Probenobjekt als eine Überlagerung unendlich vieler harmonischer Gitter modellierbar. Die Objektübertragungsfunktion t(x, y) kann hierbei komplexe Werte annehmen und folgt generell der Form $t \left(x, y\right) = {A}_{0} \left(x, y\right) ⋅ {e}^{i ϕ \left(x, y\right)} = {A}_{0} ⋅ cos \left(ϕ\left(x, y\right)\right) + {A}_{0} ⋅ i sin \left(ϕ\left(x, y\right)\right) ,$ wobei *A*₀ der Amplitude und *ϕ* der komplexen Phase des Objekts entspricht. *A*₀ gibt hierbei die Dämpfung der Amplitude des einfallenden Lichtfelds an. Die Phase hingegen beziffert die relative Phasenverzögerung des passierenden Wellenfelds. In einem Beispiel könnte die Objektübertragungsfunktion zusammen mit der Optikübertragungsfunktion basierend auf einem Modell nach Abbe erfolgen. Eine solche Technik, oft auch als "Summe der Lichtquellen" bezeichnet, abstrahiert eine gegebene Lichtquelle als Summe unendlich vieler Punktlichtquellen. Jeder Punkt der Lichtquelle - für sich kohärent, zueinander jedoch inkohärent - erzeugt nach inverser Fouriertransformation eine ebene Welle unter einem entsprechenden Winkel. Der erzeugte Phasenoffset der Welle durch außerachsiale Beleuchtung verschiebt das Objektspektrum, ersichtlich aus der Multiplikation der einfallenden Welle mit der komplexen Objektübertragungsfunktion. Im Frequenzbereich lässt sich die Feldverteilung des Lichts im Bild als Produkt aus der Fouriertransformation der Optikübertragungsfunktion und dem sogenannten Objektspektrum darstellen. Auch das Objektspektrum entspricht der Objektübertragungsfunktion. Ein einzelner Quellpunkt beleuchtet das Probenobjekt kohärent mit einer ebenen Welle und erzeugt im Bild eine Feldstärke. Durch Aufsummieren aller Quellpunkte über die Fläche der effektiven Lichtquelle und anschließender Grenzwertbetrachtung geht die Intensität aus dem Betragsquadrat der Überlagerung verschobener, mit einer Punktspreizfunktion der Optikübertragungsfunktion gefalteter Objektspektren, hervor.

Ein weiteres Beispiel (nicht erfindungsgemäß) betrifft die Bestimmung der Objektübertragungsfunktion basierend auf einer Technik gemäß Hopkins, siehe H.H. Hopkins "On the Diffraction Theory of Optical Images", Proceedings of the Royal Society A: Mathematical, Physical Engineering Sciences 217 (1953) 408-432. Ausgehend von Abbes Methode zur Bestimmung der Objektübertragungsfunktion, bei der eine ausgedehnte Lichtquelle einer Summe vieler zueinander inkohärenter Punktlichtquellen gleichkommt, entspricht die Berechnung eines teilkohärenten Abbildungssystems nach Hopkins einer vereinfachten und genäherten Variante. Hier erfolgt zunächst die Integration über die Quellenfläche und anschließend erst die Aufsummierung der Beugungsordnungen. Das hat den Vorteil, dass das optische System aus der Berechnung separiert ist. Die bilineare Natur der Abbildung im teilkohärenten Fall äußert sich durch die Überlagerung eines Objekt-Punktepaares oder dem Spektrum der Objektübertragungsfunktion. Daraus kann die Transmissions-Kreuzkoeffizientenmatrix (TCC; engl. transmission-crosscoefficient matrix) bestimmt werden, die manchmal auch als partiell-kohärente Objektübertragungsfunktion bezeichnet wird.

Der TCC entspricht in etwa der Übertragungsfunktion der partiell kohärenten Abbildung und enthält die Eigenschaften des optischen Systems sowie der Beleuchtungsgeometrie. Die Frequenzen, die die Optik übertragen, beschränken sich auf das Gebiet, in dem der TCC Werte ungleich 0 annimmt. Ein System mit hohem Kohärenzfaktor bzw. Kohärenzparameter hat demzufolge ein größeres Gebiet mit TCC ≠ 0 und ist in der Lage, höhere Ortsfrequenzen abzubilden. Im TCC steckt typischerweise die gesamte Information des optischen Systems und die TCC berücksichtigt oftmals auch komplexwertige Pupillen wie z. B. beim Zernike-Phasenkontrast oder ausgelöst durch Aberrationen. Die TCC kann eine Trennung der Optikübertragungsfunktion von der Objektübertragungsfunktion ermöglichen. Typischerweise ist die TCC als 4D-Matrix definiert, wobei jeder Wert der 4D-Matrix einem Ortsfrequenz-Paar des Objektspektrums der separaten Objektübertragungsfunktion zuzuordnen ist. Dieser Wert entspricht der Dämpfung eines jeden Frequenzpaares. Durch Aufsummieren der sich daraus ergebenden Intensitäten und anschließendes inverses Fouriertransformieren ergibt sich ein simuliertes Bild.

Die TCC ermöglicht es, ein bestehendes optisches System in Form einer 4D-Matrix im Rechner abzulegen und beim Wechseln des Probenobjekts lediglich eine Multiplikation aus dem Objektspektrum bzw. der simulierten Objektübertragungsfunktion und der TCC durchzuführen, anstatt, wie bei der Abbe-Methode, jeden Quellpunktmittels **FFT** einzeln zu propagieren. Dies ermöglicht es, die Optimierung besonders recheneffizient durchzuführen.

In anderen Worten kann ein simuliertes Bild also aus der Filterung des Objektspektrums der Objektübertragungsfunktion mit der vierdimensionalen Filterfunktion des TCC bestimmt werden, wobei die Berechnung des TCC zunächst unabhängig vom Probenobjekt möglich ist. Dadurch sind oftmals auch Frequenzen berücksichtigt, die später von einem Probenobjekt eventuell gar nicht ausgelöst werden. Aus diesem Grund kann es manchmal erstrebenswert sein, den TCC weiter zu bearbeiten, indem das optische System in eine endliche Anzahl von einzelnen kohärenten Teilsystemen zerlegt wird. Dies wird oftmals auch als Summe über kohärente System bezeichnet. Dabei kann der vierdimensionale TCC durch eine Singulärwertzerlegung in ihre Eigenwerte und Eigenfunktionen zerlegt werden. Jede Eigenfunktion wiederum entspricht einem Quellpunkt der Lichtquelle und erzeugt ein eigene kohärente Übertragungsfunktion (engl. Kernel), deren Gewichtung an der letztendlichen Bildentstehung aus der Multiplikation mit dem zugehörigen Eigenwert hervorgeht. Typischerweise klingen die Eigenwerte aufgrund der energiekompensierenden Eigenschaft der Singulärwertzerlegung (engl. singular value decomposition) rapide ab. Das führt dazu, dass eine akkurate Bestimmung eines simulierten Bilds bereits aus der Überlagerung weniger kohärenter Systeme erfolgen kann. Zum Beispiel reicht bei einem Kohärenzfaktor S ≤ 0.5 bereits der erste Kernel aus und führt zu einem Fehler von < 10 % bei der Bildentstehung. Die Eigenwerte und Eigenfunktionen bleiben bei gegebener optischer Anordnung, auch bei Variation des Objekts, konstant und sind daher ebenfalls im Vorfeld berechenbar. Dadurch kann beispielsweise eine zweidimensionale Transmissions-Kreuzkoeffizientenmatrix als Näherung bzw. Vereinfachung der vierdimensionalen Transmissions-Kreuzkoeffizientenmatrix bestimmt werden. Es werden nur einige der Eigenfunktionen, in welche die vierdimensionalen Transmissions-Kreuzkoeffizientenmatrix eine Linearzerlegung erfährt, für die tatsächliche Simulation des optischen Systems verwendet.

Basierend auf solchen Techniken ist es also möglich, die Objektübertragungsfunktion und die Optikübertragungsfunktion zu bestimmen und beispielsweise anschließend basierend auf einer geeigneten Beleuchtungsgeometrie ein oder mehrere simulierte Bilder zu erzeugen. In manchen Beispielen (nicht erfindungsgemäß) kann dann eine Optimierung zum Auffinden einer optimierten Beleuchtungsgeometrie durchgeführt werden, basierend auf der Objektübertragungsfunktion und ferner basierend auf der Optikübertragungsfunktion. Dabei können beispielsweise basierend auf der Optikübertragungsfunktion und der Objektübertragungsfunktion iterativ mehrere simulierte Bilder des Probenobjekts hinsichtlich eines Optimierungskriteriums überprüft werden. Die simulierten Bilder können dabei mit unterschiedlichen simulierten Test-Beleuchtungsgeometrien assoziiert sein.

In anderen Beispielen ist es jedoch nicht erforderlich, eine Optimierung zum Auffinden der optimierten Beleuchtungsgeometrie durchzuführen. Beispielsweise wäre es gemäß verschiedener Implementierungen möglich, das Probenobjekt mit einem KNN basierend auf einem zuvor erfassten Referenzbild zu klassifizieren. Dann kann es möglich sein, die Beleuchtungsgeometrie basierend auf dem Klassifizieren zu bestimmen. Ein KNN erlernt typischerweise den Zusammenhang zwischen dem Probenobjekt und einer geeigneten Beleuchtungsgeometrie. Dazu kann ein Datensatz, häufig auch als Trainings-Datensatz, verwendet werden, der eine vordefinierte Liste von Referenz-Probenobjekten und zugehörigen bevorzugten Referenz-Beleuchtungsgeometrien zur Verfügung stellt.

Eine beispielhafte Implementierung von neuronalen Netzwerken umfasst ein mehrschichtiges Faltungsnetzwerk (Engl., convolutional neural network, CNN). Siehe z.B. Krizhevsky, Alex, Ilya Sutskever, and Geoffrey E. Hinton. "Imagenet classification with deep convolutional neural networks." Advances in neural information processing systems. 2012 oder Lawrence, Steve, et al. "Face recognition: A convolutional neuralnetwork approach." IEEE transactions on neural networks 8.1 (1997): 98-113 oder Simard, Patrice Y., David Steinkraus, and John C. Platt. "Best Practices for Convolutional Neural Networks Applied to Visual Document Analysis." ICDAR. Vol. 3. 2003. Dabei werden in sogenannten Faltungsschichten Faltungen zwischen dreidimensionalen Kerneln und dreidimensionalen sensitiven Bereichen (engl. receptive field) einer Eingangsmatrix (engl. input feature map) bestimmt. Unterschiedliche Kernel können dabei wiederholt auf unterschiedliche sensitive Bereiche der Eingangsmatrix angewendet werden, wodurch eine Translationsinvarianz in Bezug auf die zu erkennenden Muster bzw. Merkmale des Probenobjekts bereitgestellt wird.

In weiteren Beispielen kann auch eine manuelle Klassifikation des Probenobjekts erfolgen, wobei anschließend auf eine Datenbank zum Ermitteln der Beleuchtungsgeometrien in Abhängigkeit von diesem Klassifizieren erfolgen kann. Solche Techniken können insbesondere im täglichen Gebrauch bei wiederkehrenden Typen von Probenobjekten erstrebenswert sein.

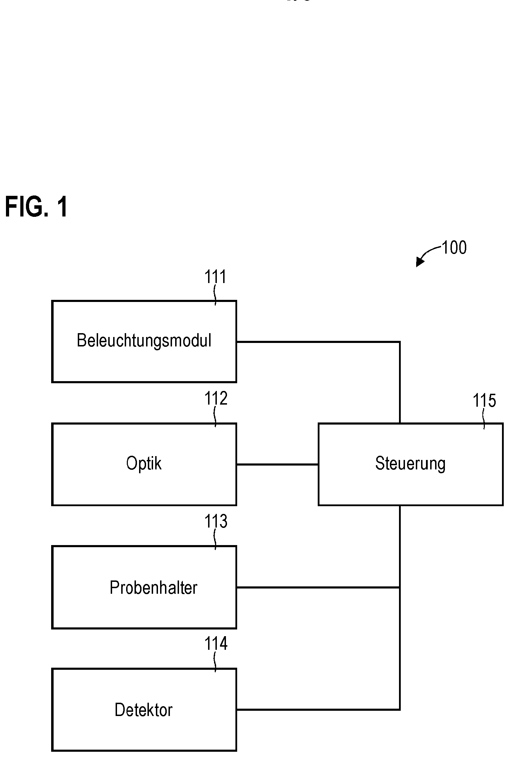

FIG. 1 illustriert ein beispielhaftes optisches System 100. Beispielsweise könnte das optische System 100 gemäß dem Beispiel der FIG. 1 ein Lichtmikroskop implementieren beispielsweise in Durchlichtgeometrie. Mittels des optischen Systems 100 kann es möglich sein, kleine Strukturen eines von einem Probenhalter 113 fixierten Probenobjekts vergrößert darzustellen. Beispielsweise könnte das optische System 100 ein Weitfeldmikroskop implementieren, bei welchem eine Probe vollflächig beleuchtet wird. Derart kann zum Beispiel eine zu untersuchende Zellkolonie als Probenobjekt mittels Blick durch ein Okular der Optik 112 des optischen Systems 100 pathologisch charakterisiert werden, ohne die aufgenommen Daten zunächst von einem Rechner auswerten oder rekonstruieren zu lassen. In anderen Beispielen könnte das optische System 100 auch ein Laser-Scanning-Mikroskop implementieren, bei welchem das Probenobjekt punktweise abgerastert wird und in einem späteren Prozess zu einem zweidimensionalen Bild zusammengefügt wird.

Das optische System 100 umfasst auch ein Beleuchtungsmodul 111. Das Beleuchtungsmodul 111 ist eingerichtet, um das Probenobjekt, das auf dem Probenhalter 113 fixiert ist, zu beleuchten. Beispielsweise könnte diese Beleuchtung mittels der Köhler'schen Beleuchtung implementiert werden. Dabei wird eine Kondensorlinse und eine Kondensor-Aperturblende verwendet. Dies führt zu einer besonders homogenen Intensitätsverteilung des zur Beleuchtung verwendeten Lichts in der Ebene des Probenobjekts.

In dem Beispiel der FIG. 1 ist das Beleuchtungsmodul 111 eingerichtet, um eine strukturierte Beleuchtung zu ermöglichen. Dies bedeutet, dass mittels des Beleuchtungsmoduls 111 unterschiedliche Beleuchtungsgeometrien des zur Beleuchtung des Probenobjekts verwendeten Lichts implementiert werden können. Dabei sind in den verschiedenen hierin beschriebenen Beispielen unterschiedliche Techniken möglich, um die unterschiedlichen Beleuchtungsgeometrien bereitzustellen. Beispielsweise könnte das Beleuchtungsmodul 111 mehrere einstellbare Beleuchtungselemente umfassen, die eingerichtet sind, um lokal Licht zu modifizieren oder auszusenden. Eine Steuerung 115 kann das Beleuchtungsmodul 111 bzw. die einstellbaren Elemente zum Implementieren einer bestimmten Beleuchtungsgeometrie ansteuern. Beispielsweise könnten die Steuerung 115 als Mikroprozessor oder Mikrocontroller implementiert sein. Alternativ oder zusätzlich könnte die Steuerung 115 beispielsweise einen FPGA oder ASIC umfassen.

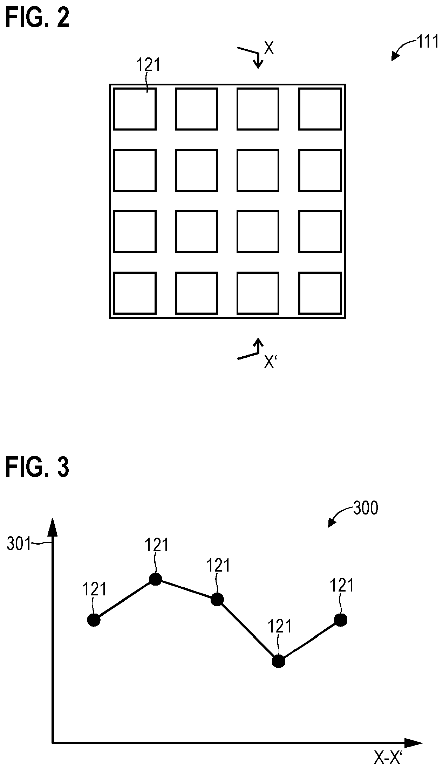

FIG. 2 illustriert Aspekte in Bezug auf das Beleuchtungsmodul 111. In FIG. 2 ist dargestellt, dass das Beleuchtungsmodul 111 eine Vielzahl von einstellbaren Beleuchtungslementen 121 in einer Matrixstruktur aufweist. Anstatt einer Matrixstruktur wäre es in anderen Beispielen auch möglich, andere geometrische Anordnungen der einstellbaren Elemente zu verwenden, beispielsweise ringförmig, halbkreisförmig etc.

In einem Beispiel könnten die einstellbaren Beleuchtungselemente 121 als Lichtquellen, beispielsweise als Leuchtdioden, implementiert sein. Dann wäre es zum Beispiel möglich, dass unterschiedliche Leuchtdioden mit unterschiedlicher Lichtstärke Licht zur Beleuchtung des Probenobjekts emittieren. Dadurch kann eine Beleuchtungsgeometrie implementiert werden. In einer weiteren Implementierung könnte das Beleuchtungsmodul 111 als räumlicher Lichtmodulator (Engl., spatial light modulator, SLM) implementiert sein. Der SLM kann ortsaufgelöst einen Eingriff in eine Kondensorpupille nehmen, was eine direkte Auswirkung auf die Bildgebung - zum Beispiel formalisiert mittels der TCC abgebildet - haben kann. Dabei kann der SLM mehrere einstellbare Elemente 121, zum Beispiel Mikrospiegel oder Flüssigkristalle, aufweisen. Zum Beispiel kann der SLM eine digitale Mikrospiegelvorrichtung implementieren (Engl., digital micromirror device, DMD). Dabei ist ein mikromechanisch verkippbarer Spiegel in Abhängigkeit des von außen anliegenden elektrostatischen Felds zwischen dem Spiegel und dem Trägermaterial in zwei Stellungen positionierbar. Jedes einstellbare Element 121 als Pixel kann etwa eine Größe von 11,8-16 µm und Schaltfrequenzen von ca. 5 kHz aufweisen. Diese Mikrospiegel lenken das einfallende Strahlbündel entweder auf einen Absorber oder in die Richtung der späteren Anwendung. Flüssigkristalle wiederum können die Phase und/oder die Amplitude der einfallenden Wellenfront beeinflussen. Die einstellbaren Beleuchtungselemente 121 können als Flüssigkristallzellen implementiert sein, die zwischen zwei transparenten Elektroden angeordnet sind. Beim Anlegen einer äußeren Spannung bzw. eines äußeren elektrischen Felds wird die Ausrichtung dieser Kristalle verändert. Die doppelbrechende Eigenschaft des Flüssigkristalls bewirkt eine räumliche Variation des Brechungsindexes bzw. eine Veränderung der Polarisation der elektromagnetischen Welle.

Solche oder andere SLMs können in der Kondensoraperturebene des Beleuchtungsmoduls 111 angeordnet sein. Es ist beispielsweise möglich, die Kondensoraperturblende durch einen pixelierten SLM zu ersetzen. Durch Variation der Transmission einzelner Pixel sind neben beliebigen Beleuchtungsgeometrien auch symmetrische oder kontinuierliche Beleuchtungsgeometrien wie eine ringförmige Blende oder schiefe Beleuchtung möglich. Weiterhin kann ein SLM auch in Form eines DMD in einer zu der Kondensorapertur konjugierten Ebene verwendet wird. Aktive LED-Matrizen könne hierzu ebenfalls Verwendung finden. Um die korrekte Funktionsweise zu gewährleisten, ist es oftmals erstrebenswert, dass eine Linearität zwischen der Lichtquelle, dem SLM und der Kamera besteht. Das Ansteuerverhalten eines LCD kann mit einer Gammakorrektur kalibriert werden. Das SLM kann in Transmissionsmodus verwendet werden, wobei z.B. eine LED oder eine Halogenlampe die eigentliche Lichtquelle darstellt.

FIG. 3 illustriert Aspekte in Bezug auf eine beispielhafte Beleuchtungsgeometrie 300. In FIG. 3 ist die bereitgestellte Lichtstärke 301 für die verschiedenen einstellbaren Elemente 121 des Beleuchtungsmoduls 111 entlang der Achse X-X' aus FIG. 2 dargestellt. Während in FIG. 3 eine kontinuierlich variierte Lichtstärke dargestellt ist, wäre es in anderen Beispielen auch möglich, dass das Beleuchtungsmodul Beleuchtungselemente 121 mit An-Aus-Funktionalität bereitstellt.

In FIG. 3 ist ersichtlich, dass bei der dargestellten Beleuchtungsgeometrie 300 die unterschiedlichen einstellbaren Beleuchtungselemente 121 des Beleuchtungsmoduls 111 unterschiedliche Lichtstärken 301 bereitstellen. Durch gezieltes Ausblenden von Intensitäten in der effektiven Lichtquelle oder durch anderweitige Implementierung der Beleuchtungsgeometrien können in den verschiedenen hierin beschriebenen Beispielen bestimmte Details des Probenobjekts bzw. bestimmte Objekt-Frequenzen/- Informationen verstärkt oder abgeschwächt werden. In den verschiedenen hierin beschriebenen Beispielen kann eine geeignete Beleuchtungsgeometrie aufgefunden werden, die dazu führt, dass Frequenzen, die anderenfalls durch destruktive Interferenz beispielsweise den Phasenkonstrast in einem Bild des Probenobjekts zerstören würden, vermieden bzw. unterdrückt werden. Derart kann ein besonders gutes Bildergebnis für das Bild des Probenobjekts erhalten werden, beispielsweise im Vergleich zu einer herkömmlichen Hellfeldbeleuchtung. Neben einer besonderen Betonung des Phasenkontrasts könnten auch andere Gütekriterien beachtet werden.

In den verschiedenen hierin beschriebenen Beispielen kann es möglich sein, die Einstellung für jedes einstellbares Beleuchtungselement zu optimieren. Diese bedeutet, dass nicht-monotone bzw. beliebige Einstellungen der Beleuchtungselemente zur Implementierung einer geeigneten Beleuchtungsgeometrie verwendet werden können. Dies kann insbesondere gegenüber Techniken, die z.B. fixe halbkreisförmige Beleuchtungsgeometrien etc. verwenden eine flexiblere Optimierung des Bildergebnisses ermöglichen. Beispielsweise ist in FIG. 3 ersichtlich, dass die Beleuchtungsgeometrie 300 einer nicht-montonen Variation von Beleuchtungselement 121 zu Beleuchtungselement 121 entspricht.

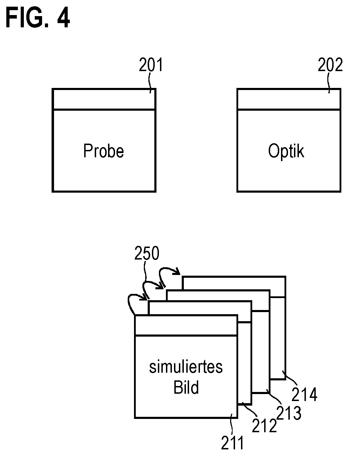

FIG. 4 illustriert Aspekte in Bezug auf das Bestimmen einer optimierten Beleuchtungsgeometrie 300 mittels einer Optimierung 250. In dem Beispiel der FIG. 4 erfolgt das Auffinden der optimierten Beleuchtungsgeometrie 300 automatisch unter Zuhilfenahme von entsprechenden rechnergestützen Algorithmen. Dabei ist es in den verschiedenen hierin beschriebenen Techniken nicht erforderlich, dass a-priori Information über das Probenobjekt vorhanden ist. Eine Objektübertragungsfunktion 201 wird vielmehr basierend auf einer Referenzmessung bestimmt. Zusammen mit einer Optikübertragungsfunktion 202 ist es dann möglich, die Optimierung 250 zum Auffinden der optimierten Beleuchtungsgeometrie 300 durchzuführen.

Dazu ist es beispielsweise möglich, dass die Optimierung 250 iterativ mehrere basierend auf der Objektübertragungsfunktion 201 und ferner basierend auf der Optikübertragungsfunktion 202 simulierte Bilder 211-214 des Probenobjekts bestimmt. Dann kann hinsichtlich eines Optimierungskriteriums überprüft werden, ob eines der simulierten Bilder 211-214 ein Optimierungskriterium erfüllt. Beispielsweise wäre es möglich, dass unterschiedliche simulierte Bilder 211-214 mit unterschiedlichen Test-Beleuchtungsgeometrien assoziiert sind.

Die verwendete Optikübertragungsfunktion 202 kann dabei vorbestimmt sein und beispielsweise in einem nicht flüchtigen Speicher hinterlegt sein. Beispielsweise könnte die Optikübertragungsfunktion 202 eine vierdimensionale TCC oder eine dominante Eigenvektoren der vierdimensionalen TCC entsprechende zweidimensionale TCC umfassen.

Dabei können unterschiedliche Optikübertragungsfunktionen 202 mit unterschiedlichen Beleuchtungsgeometrien 300 assoziiert sein. Dies bedeutet, dass ein Satz von Optikübertragungsfunktionen 202 vorgesehen sein kann, der den unterschiedlichen Test-Beleuchtungsgeometrien 300 entspricht. Es wäre in anderen Beispielen auch möglich, dass die jeweilige Optikübertragungsfunktion 202 basierend auf der aktuell für das entsprechende simulierte Bild 211-214 verwendeten Test-Beleuchtungsgeometrie bestimmt wird.

Aus FIG. 4 ist ersichtlich, dass Parameter, mit denen die Bildaufnahme geschieht, wie z.B. NA des Objektivs und Kondensors - d. h. im Allgemeinen der Optik 112 - a-priori bekannt sein können. Ein digitales Modell des optischen Systems kann im Computer erzeugt werden, wobei dieses Modell lediglich einmal berechnet werden kann und dann z. B. als TCC auch bei wechselnden Probenobjekten bzw. Objektübertragungsfunktionen wiederverwendet werden kann.

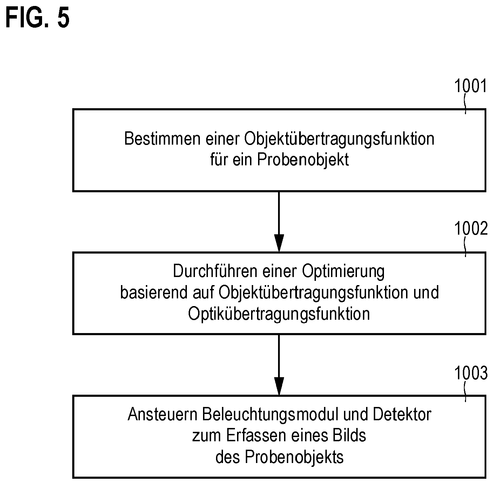

FIG. 5 illustriert ein beispielhaftes Verfahren (nicht erfindungsgemäß). Zunächst wird in 1001 eine Objektübertragungsfunktion für ein Probenobjekt bestimmt. Dies kann basierend auf einer Referenzmessung erfolgen. Beispielsweise kann der vierdimensionale TCC oder der zweidimensionale TCC bestimmt werden.

Anschließend wird in 1002 eine Optimierung durchgeführt. Dies geschieht basierend auf der in 1001 bestimmten Objektübertragungsfunktion sowie einer Optikübertragungsfunktion. Die Optikübertragungsfunktion kann vordefiniert in einem Speicher hinterlegt sein. Z.B. können unterschiedliche Optikübertragungsfunktionen für unterschiedliche Test-Beleuchtungsgeometrien, die im Rahmen der Optimierung berücksichtigt werden, im Speicher hinterlegt sein.

Dann wird in 1003 das Beleuchtungsmodul und ein Detektor zum Erfassen eines Bilds des Probenobjekts angesteuert. Dabei wird eine Beleuchtungsgeometrie verwendet, die basierend auf der Optimierung aus 1002 aufgefunden wurde. Es ist grundsätzlich optional, das Bild des Probenobjekts mittels des Detektors zu erfassen. Alternativ wäre es beispielsweise möglich, dass lediglich die Beleuchtung des Probenobjekts mit der aufgefundenen Beleuchtungsgeometrie und mittels eines geeigneten Beleuchtungsmodul erfolgt, sodass eine Betrachtung durch einen Benutzer, beispielsweise durch ein Okular, ohne Digitalisierung erfolgt.

Beispielsweise könnte das Verfahren gemäß FIG. 5 durch eine Steuerung 115 des optischen Systems 100 (vgl. FIG. 1) ausgeführt werden.

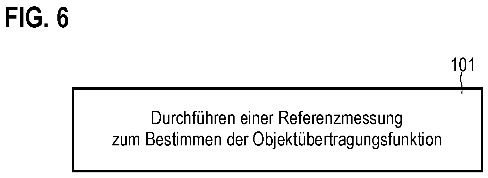

FIG. 6 ist ein Flussdiagramm eines beispielhaften Verfahrens (nicht erfindungsgemäß). In 1011 wird eine Referenzmessung durchgeführt, um die Objektübertragungsfunktion zu bestimmen. In den unterschiedlichen hierin beschriebenen Beispielen können unterschiedlichste Techniken zum Bestimmen der Objektübertragungsfunktion verwendet werden. Entsprechend kann auch die benötigte Referenzmessung variieren. Um eine Grundlage für die Optimierung der Beleuchtungsgeometrie zu haben, ist oftmals eine ungefähre Information über die Amplitude und die Phase des Probenobjekts nötig. Dies bedeutet, dass die Objektübertragungsfunktion bestimmt wird. Mittels eines Intensitätsbilds kann die Objekt-Amplitude bestimmt werden.

Es existieren verschiedene Phasen-Rekonstruktions-Algorithmen, wie beispielsweise die Gleichung des Transport der Intensität (TIE), welcher durch einen iterativen Prozess aus einem Aufnahmestapel mit unterschiedlichen Fokuslagen entlang der Z-Achse die Phase rekonstruiert. Andere Verfahren erreichen das über eine Aufnahme eines Inteferogramms und anschließender Auswertung. Durch Einflussnahme auf die Beleuchtungsgeometrie ist es möglich, zum Beispiel durch einen iterativen Phasen-Rekonstruktions-Algorithmus, z. B. Gerchberg-Saxton, aus mehreren Aufnahmen mit unterschiedlichen Beleuchtungswinkeln als Grundlage die Phase zu rekonstruieren.

Es ist also möglich, dass die Referenzmessung durch Ansteuern des Beleuchtungsmoduls 111 zum Beleuchten des Probenobjekts aus unterschiedlichen initialen Beleuchtungsgeometrien - wie insbesondere wohldefinierten Beleuchtungsrichtungen - und durch Ansteuern des Detektors zum Erfassen mehrerer initialer Bilder des Probenobjekts, die mit unterschiedlichen initialen Beleuchtungsgeometrien assoziiert sind, durchgeführt wird. Dann kann ein Phasenkonstrast-gewichtetes Referenzbild des Probenobjekts basierend auf den mehreren initialen Bildern des Probenobjekts bestimmt werden. Dabei kann das Referenzbild in manchen Beispielen eine qualitative Information über die Objektphase beinhalten. Dies kann sich beispielsweise gut zur Segmentierung, Kontrastgebung und Observierung von Zellen eignen. In anderen Beispielen ist es jedoch auch möglich, das Phasenkontrast-gewichtete Referenzbild mit einer quantitativ auswertbaren Information über die Objektphase zu bestimmen. Daraus können die Brechungsindizes innerhalb der Probe bestimmt werden.

Eine Technik des Phasenkontrast-gewichteten Referenzbilds betrifft den iterativen Fouriertransformations-Algorithmus. Beim iterativen Fouriertransformations-Algorithmus sind die Eingangswerte Intensitätsmessung bei einer bestimmten Z-Position für die, die zunächst unbekannte Phase gefunden werden soll, sowie eine weitere Messung bei einer weiteren Z-Position. Das komplexe Lichtfeld *Eᵢₙᵢₜ = A*₀ *· e*^{(*iϕᵢₙᵢₜ*)} bildet sich aus der Amplitude bzw. der Wurzel gemessenen Intensitätsverteilung ${A}_{0} = \sqrt{{I}_{z 0}}$ und einer Startphase *e*^{(*iϕᵢₙᵢₜ*)}*,* welche häufig mit zufälligen Werten gewählt ist. Durch die Propagation in den Frequenzraum mittels Fouriertransformation wird das Spektrum erzeugt, bei dem die Amplitude extrahiert und durch die Amplitude des Spektrums aus der zweiten Messung ${A}_{1} = \sqrt{{I}_{z 1}}$ ersetzt wird.

Dieses Feld wird mit einer inversen Transformation in die vorherige Ebene propagiert, wo eine erneute Ersetzung der Amplitude durch die in der Ebene gemessene Intensität stattfindet. Dieser Prozess kann innerhalb einer Schleife mit geeignetem Abbruchkriterium ablaufen, wobei die rekonstruierte Phase sukzessive gegen ihren wahren Wert konvergiert.

Ein ähnliches Schema verfolgt der Fourier-Ptychographie-Algorithmus, bei dem die Z-Position konstant bleibt und die Beleuchtungswinkel einer Variation unterliegen. Die Grundidee des Algorithmus ist es, die Subspektren - welches ausgelöst durch die schiefe Beleuchtung im Frequenzraum verschoben werden - an ihrer entsprechende wahre Stelle eines Hauptspektrums zu platzieren. Ähnlich wie bei der Variante, die Phase iterativ zu rekonstruieren, konvergiert hier durch zyklisches Ersetzen der Spektren mit den gemessenen Werten die Phase.

Nachfolgend wird der Ablauf einer beispielhafte Fourier-Ptychographie-Analyse beschrieben:
(I) Erzeugen eines Hauptspektrums: Als Basis dient ein mittels Fouriertransformation erzeugtes hochauflösendes Spektrum der Amplitude und Initialphase aus einer interpolierten, z. B. Faktor x2, Intensitätsmessung ${E}_{1} = \sqrt{{I}_{{1}_{HR}} ⋅ {e}^{iϕHR}}$, z. B. aus zentraler Beleuchtung.
(II) Extrahieren des Subspektrums *̅k̅ᵢ̅*̅ : Aus dem hochauflösenden Spektrum wird der Anteil herausgeschnitten, welcher dem Frequenzbereich der i-ten Intensitätsmessung entspricht. Hierbei entspricht der Radius *r_{MO}* der KTF des Objektivs und das Zentrum der Sub-Apertur $k \left({v}_{x}, {v}_{y}\right) = \frac{2 π sin \left(ϕ, θ\right)}{λ}$.
(III) Ersetzen des Subspektrums durch Messung: Nach inverser Fouriertransformation des extrahierten Spektrums wird die Amplitude durch die Wurzel der i-ten Intensitätsmessung ${E}_{i} = \sqrt{{I}_{{i}_{M}}}$ ersetzt, wobei die Phase *ϕ_{LR}* unberührt bleibt, Das folgt zu *Eᵢ = E_{i_{M}} · e^{i·ϕ_{LR}}.*
(IV) Platzieren der aktualisierten Feldverteilung im hochauflösenden Spektrum: Die komplexe Feldstärke *E_{i_{HR}}* wird mittels FFT2 zurück in den Frequenzraum propagiert und nach Filterung mit der KTF an die entsprechende Stelle im hochauflösenden Spektrum verschoben (das geschieht für alle 1... n Aufnahmen).
(V) Konvergenz der Phase: Üblicherweise sind die Schritte (II)-(IV) etwa zwei bis drei Mal durchzuführen, bis die Phase konvergiert.

Eine vergleichsweise einfache Technik, um das Phasenkontrast-gewichtete Referenzbild zu bestimmen, basiert auf einer Kombination der initialen Bilder des Probenobjekts. Entsprechende Techniken sind beispielsweise in DE 10 2014 112 242 A1 beschrieben.

Ein anderes Verfahren, eine quantitative Auswertung der Phase zu ermöglichen, ist es, den Zusammenhang zwischen Phase und Intensitätsbild auszunutzen. Derart ist es möglich, eine Objektübertragungsfunktion aufzustellen. Durch eine Entfaltung der Rohdaten - mit entsprechender Regularisierung - ist es so möglich, die Phase quantitativ zu messen. Durch die Inkohärenz der Quelle liegt die Grenzfrequenz weiterhin beim Doppelten eines vergleichbaren kohärenten Aufbaus. Siehe L. Tian und L. Waller: "Quantitative differential phase contrast imaging in an LED array microscope", Optics Express 23 (2015), 11394.

Aus obenstehenden Beispielen ist ersichtlich, dass in den verschiedenen Implementierungen unterschiedliche Techniken zum Bestimmen der Objektübertragungsfunktion gewählt werden können. Wenn die Objektübertragungsfunktion bestimmt wurde, ist es möglich, mit dem Durchführen der Optimierung fortzufahren. Dabei kann beispielsweise ein Startpunkt der Optimierung und/oder eine Randbedingung der Optimierung basierend auf dem Referenzbild oder dem Objektübertragungsfunktion gesetzt werden.

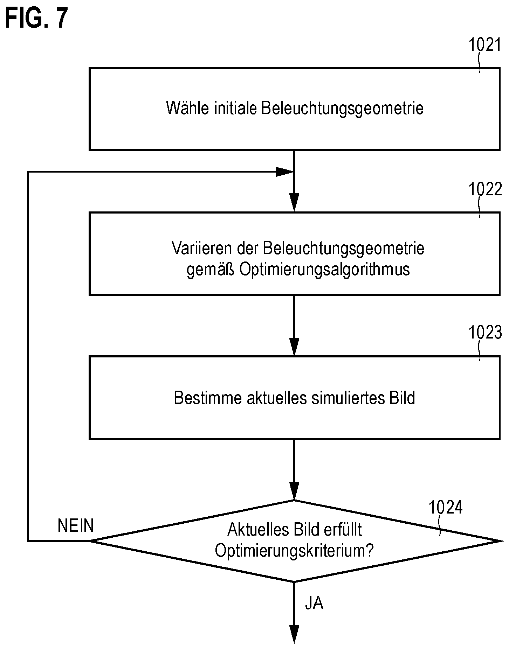

FIG. 7 ist ein Flussdiagramm eines beispielhaften Verfahrens.

Dabei wird in 1021 eine initiale Beleuchtungsgeometrie gewählt. Dies kann dem Setzen eines Startpunkts für die nachfolgend durchgeführte Optimierung entsprechen. Beispielsweise wäre es möglich, die initiale Beleuchtungsgeometrie ausgehend von bekannten Zusammenhängen zwischen der zuvor bestimmten Objektübertragungsfunktion und tendenziell geeigneten initialen Beleuchtungsgeometrien zu wählen. Beispielsweise könnte in 1021 ein KNN zum Klassifizieren der Objektübertragungsfunktion und dem Wählen der initialen Beleuchtungsgeometrie basierend auf diesem Klassifizieren angewendet werden.

Dann wird in 1022 die aktuelle Beleuchtungsgeometrie - die in der ersten Iteration der initialen Beleuchtungsgeometrie aus 1021 entspricht - gemäß dem gewählten Optimierungsalgorithmus variiert.

In den verschiedenen hierin beschriebenen Beispielen können unterschiedliche Optimierungsalgorithmen verwendet werden. Beispielsweise könnte ein Partikel-Schwarm-Algorithmus angewendet werden. Der Partikel-Schwarm-Algorithmus erfordert keine Differentation einer das Optimierungskriterium beschreibende Zielfunktion.

Beim Partikel-Schwarm-Algorithmus erfolgt die Modulation der Bewegung eines einzelnen Partikels, was der Variante eines innerhalb eines des Beleuchtungsmoduls einstellbaren Schwarmsegments entspricht, aus bis zu drei

Geschwindigkeitskomponenten:
(I) der eigene Geschwindigkeitskomponente (Betrag und Richtung) aus vorheriger Bewegung (bzw. Initialgeschwindigkeit);
(II) der Geschwindigkeitskomponente des Schwarms, also dem Mittel aller Teilchen; und/oder
(III) der zufälligen Komponente, was der Entscheidung des Lebewesens entspricht.

Dabei entspricht jedes Partikel x im n-dimensionalen Lösungsraum - repräsentiert durch die Quellen-Koeffizienten *xₖ* (1) ... *xₖ* (*n*) - einer möglichen Lösung des inversen Problems, wobei k dem aktuellen Iterationsschritt entspricht.

Ein guter Initialwert für die sogenannte Population stellt eine zufällige Streuung oder eine aus der initialen Bestimmung der Objektübertragungsfunktion hervorgehende Verteilung der Koeffizienten *x*₁ (1) ... *x*₁ (*n*) im Raum dar. Bei jeder Iteration k erfahren alle Partikel des Schwarms eine Neupositionierung, die sich aus dem Geschwindigkeitsvektor und der vorhergegangenen Position ergibt.

Die einzelnen Partikel bewegen sich in Abhängigkeit aller anderen, also immer in Richtung eines Optimums, was jedoch kein globales Minimum bzw. Maximum sein muss. Dadurch, dass die Schrittweite, anders als bei einer Grid-Search-Methode, in jedem Iterationsschritt variiert, ist der Algorithmus auch in der Lage, ein Optimum zwischen zwei Knoten aufzuspüren, was ein Vorteil sein kann.

Ein weiterer beispielhafter Optimierungsalgorithmus ist der sogenannte Raster-Such-Algorithmus (Engl., grid-search algorithm). Der Raster-Such-Algorithmus, der Klasse der direkten Such-Algorithmen, verteilt im ersten Schritt die Initialparameter entweder anhand eines festgelegten Musters, z. B. äquidistantes Gitter, zufällig oder nach eigenem Initialmuster im Lösungsraum. Mit jedem Iterationsschritt wird um einen durch die Parameter *x*₁ (1) ... *x*₁(*i*) gebildeten Knoten k ein Netzt mit gewisser Ausdehnung im Lösungsraum gespannt. Jeder Eckpunkt bzw. Knoten *kᵢ* stellt eine neue mögliche Lösung, repräsentiert durch die Parameter *xᵢ*(*1*) ... *xᵢ*(*i*)*,* der das Optimierungskriterium beschreibenden Zielfunktion dar. Verbessert sich die Zielfunktion bei einem dieser Knoten, bildet dieser das Zentrum für den nächsten Iterationsschritt. Die Ausdehnung des Netzes verringert sich, sobald der Algorithmus einem Minimum näher kommt. Die Ausdehnung der Maschen innerhalb des Lösungsraums steigt, wenn innerhalb des Iterationsschritts kein Minimum gefunden wird, um fas Suchgebiet zu erweitern.

Der von der Optimierung abzudeckende Suchraum, der durch geeignete Variation der Beleuchtungsgeometrien in 1022 abzudecken ist, kann in verschiedenen Beispielen vergleichsweise groß sein. Typischerweise weist nämlich das Beleuchtungsmodul eine Vielzahl von zu optimierenden Parametern auf, die die Beleuchtungsgeometrie beeinflussen. Als Beispiel umfasst zum Beispiel ein Lichtmodulator in der Kondensorpupille NxM Bildpunkte als Beleuchtungselemente, die digital oder in Graustufen schaltbar sind. Durch die (NxM)^x verschiedenen möglichen Kombinationen - wobei x der Anzahl der schaltbaren Stufen entspricht - ergibt sich ein besonders großer Suchraum. Oftmals kann beispielsweise N und/oder M > 100 sein, optional > 1000, weiter optional > 5000.

In manchen Beispielen kann es daher erstrebenswert sein, die Variation der Beleuchtungsgeometrie in 1022 zu vereinfachen. Dazu kann in manchen Beispielen die Test-Beleuchtungsgeometrie basierend auf einer gewichteten Überlagerung verschiedener Anteile einer Polynom-Reihenentwicklung, wie beispielsweise Zernike-Polynome, bestimmt werden.

In anderen Worten ist es also möglich, die Pixelstruktur eines Lichtmodulators bzw. im Allgemeinen die verfügbaren Beleuchtungsgeometrien durch Parametrisierung zu vereinfachen. Zum Beispiel können dazu Zernike-Polynome verwendet werden, um die Kreispupille zu zerlegen. Die Zernike-Polynome bilden dabei eine radiale Basis. Es wäre auch möglich, einen Kreis in eine Anzahl von Kreissegmenten zu unterteilen. Jedes Zernike-Polynom, welches einem Zernike-Koeffizienten zugeordnet ist, bzw. jedes Kreissegment kann dann unabhängig voneinander als Test-Beleuchtungsgeometrie mittels der Optikübertragungsfunktion im Vorfeld simuliert und abgespeichert werden. Es kann also in anderen Worten eine Vielzahl von Optikübertragungsfunktionen für die verschiedenen Anteile der Polynom-Reihenentwicklung vorbestimmt sein. Dann kann eine gewichtete Überlagerung der im Vorfeld erzeugten Optikübertragungsfunktionen als Superposition zum Bestimmen der simulierten Bilder verwendet werden. Dies kann den Rechenaufwand erheblich reduzieren. Dadurch kann ein schnelleres Durchführen der Optimierung ermöglicht werden.

In 1023 kann mittels solcher Techniken ein simuliertes Bild bestimmt werden. Das simulierte Bild kann aus einer Kombination der Optikübertragungsfunktion und der Objektübertragungsfunktion bestimmt werden.

In 1024 wird dann überprüft, ob das aktuelle simulierte Bild das vorgegebene Optimierungskriterium erfüllt. Die entsprechende Qualitätsfunktion, die den gegenwärtigen Status der Optimierung quantifiziert, kann frei gewählt werden. Steht beispielsweise der Phasenkontrast im Vordergrund, kann eine teilkohärente Abbildung einer komplexwertigen Objektübertragungsfunktion simuliert werden. Bei Variation der Koeffizienten verändert sich der Kontrast im simulierten Bild, insbesondere dessen Intensität. Die Koeffizienten werden von einem geeigneten Optimierer in der Weise verändert, dass sie eine gegebene Kostenfunktion minimieren, bzw. ein gegebenes Optimierungskriterium verbessern.

Das Optimierungskriterium kann beispielsweise das Vorhandensein höherer Ortsfrequenzen im Bild besser bewerten, was z. B. zu einer höheren Auflösung von Objektdetails führen kann. Entsprechend wäre es also möglich, dass das Optimierungskriterium einen Bildkontrast der simulierten Bilder umfasst. Der Bildkontrast kann insbesondere den höheren Ortsfrequenzen entsprechen. Alternativ oder zusätzlich wäre es auch möglich, dass das Optimierungskriterium eine Objektähnlichkeit eines Abbilds des Probenobjekts in den simulierten Bildern mit einem Referenzprobenobjekt (engl. fidelity) umfasst.

Dabei dient also das Referenz-Probenobjekt als Referenz, anhand derer der optimale Phasenkontrast erzeugt werden soll. Die Phasenmessung z.B. phi = 0...pi kann beispielsweise in einen Intensitäts-Farbraum mit Grauwerten von 0..255 abgebildet werden. Die Optimierung manipuliert dann solange die Lichtquelle, bis die Differenz zwischen der gemessenen Intensität auf dem Detektor, was dem Resultat der mit dem TCC gefalteten bzw. gefilterten Objektübertragungsfunktionen entspricht, und dem vom "Phasenraum" (0...pi) in die Intensität abgebildete Objektphase möglichst gering ist. Gleiches ist auch für die Amplitude zutreffend, indem bspw. die Amplitudenmessung in der Weise im Vorfeld manipuliert wird, dass niedrige Frequenzen herausgeschnitten werden und das optimierte Bild mit dieser Referenz verglichen wird.

Aus dem Bereich der Interferometrie ist der sogenannte Michelson-Kontrast gegeben als $C = \frac{{I}_{max} - {I}_{min}}{{I}_{max} - {I}_{min}} ,$ mit den maximalen *Iₘₐₓ* sowie minimalen *Iₘᵢₙ* Intensitäten. Eine Anwendung auf das simulierte Bild ist manchmal schwierig, da sowohl der minimale als auch der maximale Pixel-Grauwert z. B. durch Rauschen entstehen kann. Daher kann der CPP-Kontrast verwendet werden, welcher sich wie folgt berechnet: $F = \sqrt{\frac{1}{MN} {\sum }_{i = 0}^{N - 1} {\sum }_{j = 0}^{M - 1} {\left({I}_{ij}-\overline{I}\right)}^{2}} .$

Als weiteres Optimierungskriterium kann die sogenannte "Fidelity" oder Objektähnlichkeit verwendet werden. Dies bezeichnet häufig das Betragsquadrat aus der Differenz zwischen dem idealen und realen Bild: $F = {\left‖I-{I}_{ideal}\right‖}^{2}$ ${I}_{ideal} \left(x\right) = {\left|t\left(x\right)\right|}^{2} bzw . {I}_{ideal} \left(x\right) = arg \left(t\left(x\right)\right) bei Phasenobjekten$ bei Phasenobjekten$F = \sqrt{{\sum }_{x} I \left(x\right) - {\left|t\left(x\right)\right|}^{2}}$ mit rekonstruierten Übertragungsfunktion t(x) und I(x) dem aerial image.

Wird in 1024 bestimmt, dass das aktuelle Bild das Optimierungskriterium noch nicht erfüllt, wird eine weitere Variation der Beleuchtungsgeometrie in einer erneuten Iteration von 1022-1024 durchgeführt. Anderenfalls wurde eine Test-Beleuchtungsgeometrie aufgefunden, die als Beleuchtungsgeometrie für das anschließende tatsächliche Beleuchten der Probe zum Erfassen eines Bilds geeignet ist.

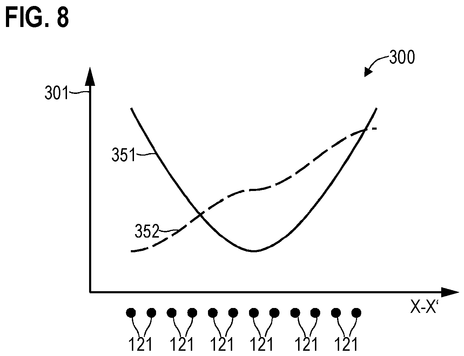

FIG. 8 illustriert Aspekte in Bezug auf das Variieren der Test-Beleuchtungsgeometrie im Rahmen des Durchführens der Optimierung. In FIG. 8 ist dargestellt, wie die einstellbaren Lichtstärke 301 verschiedener einstellbarer Elemente 121 des Beleuchtungsmoduls 111 - durch das Verwenden von parametrisierten Polynom-Reihenentwicklungen bestimmt werden kann. Während in FIG. 8 ist eine kontinuierlich variierte Lichtstärke 301 dargestellt ist, wäre es in anderen Beispielen auch möglich, dass das Beleuchtungsmodul Beleuchtungselemente 121 mit An-Aus-Funktionalität bereitstellt.

In FIG. 8 sind zwei Anteile 351, 353 in der beispielhaften Polynom-Reihenentwicklung dargestellt. Der Freiheitsgrad, die beste Beleuchtungsgeometrie zu finden, bedeutet eine große Schar an möglichen Parametern und unterschiedlichen Kombinationen. Es können beispielsweise etwa 25.000 einstellbare Beleuchtungselemente 121 vorhanden sein. Daher ist es oftmals sinnvoll, die Optimierung auf eine Form zu beschränken, die durch wenige Parameter definiert ist. Gezeigt sind die Parametrisierung durch Unterteilung der Kondensorapertur in Zernike-Polynome 351, 352. Alternativ könnten auch Kreissegmente verwendet werden. Dadurch reduziert sich die Anzahl der Freiheitsgrade drastisch, z. B. auf 36 Koeffizienten. Die Zernike-Polynome ergeben sich aus einer orthogonalen Expansion in den Polarkoordinaten mit Radius 1 und sind somit kreisförmig orthogonale Polynome.

Nach der sogenannten Noll'schen Zählweise werden beispielsweise die TCCs der ersten 37 Koeffizienten im Vorfeld berechnet und während des Durchführens der Optimierung überlagert. Die Zernike-Polynome können auch negative Werte annehmen, was bei der Lichtquelle nicht der Fall ist. Daher ist es sinnvoll, den Nullpunkt der Intensität z. B. auf *I*₀ = 0.5 zu verschieben und den Wertbereich in der Optimierung auf *I* = 0..1 zu begrenzen.

Um eine Grundlage für eine mögliche Lösung des Optimierungsproblems zu liefern, wird beispielsweise eine erste Beleuchtungsgeometrie basierend auf der bestimmten Objektübertragungsfunktion generiert. Aus den Überlappbereichen der Hauptbeugungsbilder innerhalb der Pupille glättet ein Gaußfilter die scharfen Kanten des resultierenden Intensitätsmusters, worin dann ein Zernike-Fit-Algorithmus die entsprechenden Zernike-Koeffizienten sucht, welche die Oberfläche bestmöglich repräsentieren. Die erhaltenen Koeffizienten stellen die Initialparameter für den späteren Optimierungsalgorithmus dar. Nach Abschluss des Durchführens der Optimierung kann dann die optimierte Beleuchtungsgeometrie aufgefunden werden, indem basierend auf einer Zuordnung zwischen den im Ortsraum kontinuierlich definierten Funktionen der Polynom-Reihenentwicklung als Optimierungsgröße der Optimierung und der Vielzahl von diskreten einstellbaren Elementen 111 des mindestens einen Beleuchtungsmoduls angewendet wird.

Zusammenfassend wurden obenstehend Techniken beschrieben, die mittels des Durchführens einer Optimierung eine optimierte Beleuchtungsgeometrie bestimmen können. Dabei kann durch geeignete Wahl des Optimierungskriteriums vorgegeben werden, welche Eigenschaft ein anschließend mit der aufgefundenen Beleuchtungsgeometrie zu erfassendes Bild aufweisen soll. Während voranstehend verschiedene Beispiele in Bezug auf ein Optimierungskriterium, das in Bezug auf den Phasenkontrast definiert ist, erläutert wurden - beispielsweise der Bildkontrast oder die Objektähnlichkeit -, wäre es in anderen Beispielen jedoch auch möglich, andere Optimierungskriterien zu wählen. Dann kann ein Bild des Probenobjekts mit der aufgefundenen, optimierten Beleuchtungsgeometrie erfasst werden, welches die gewünschten Eigenarten aufweist. Um beispielsweise den Phasenkontrast zu optimieren, wird eine komplexwertige Objektübertragungsfunktion, die sowohl die Amplitude als auch die Phase beinhaltet, bestimmt.

Verschiedene Algorithmen sind in der Lage, ohne den optischen Aufbau, bestehend aus Weitfeldmikroskop mit digitaler Kondensorpupille, zu verändern, die Phase zu rekonstruieren oder zumindest in ausreichender Form anzunähern. Der Fourier-Ptychographie-Algorithmus beleuchtet das Objekt aus mehreren Richtungen und lässt die unterschiedlichen Frequenzinformation in eine Art iterativen Fourier-Algorithmus (iFTA) einfließen. Das Resultat ist neben eines erhöhten Spatial-Bandwidth Product die rekonstruierte Phase.

Die inverse Übertragungsfunktion des quantitativen Phasenkontrastverfahrens stellt eine robuste Möglichkeit dar, dir Phase von dünnen Phasenobjekten, die der ersten Born'schen Näherung folgen, zu bestimmen. Hierbei werden jeweils zwei komplementäre Halbkreismuster auf dem SLM dargestellt und die Intensitätsbilder miteinander verrechnet.

Zufälliges "Durchprobieren" der Parameter, die die Beleuchtungsgeometrie definieren, - z. B. Zernikekoeffizieten - führen in den wenigsten Fällen zu einem guten Ergebnis. Optimierungsalgorithmen, die den Gradienten der Kostenfunktion zur Definition eines Optimierungskriteriums benötigen, können oftmals nicht verwendet werden, da sich der Gradient durch die Verwendung des TCCs in Verbindung mittels SVD schwer analytisch berechnen lässt. Aus diesem Grund können diverse sogenannte genetische Algorithmen Verwendung finden. Der sogenannte Partikel-Schwarm Algorithmus bewegt einen Schwarm an Partikeln, wobei jedes Partikel eine Lösung mit n-Koeffizienten darstellt durch einen n-Dimensionalen Lösungsraum. Ähnlich wie in der Biologie folgt der gesamte Schwarm einem globalen Maximum.

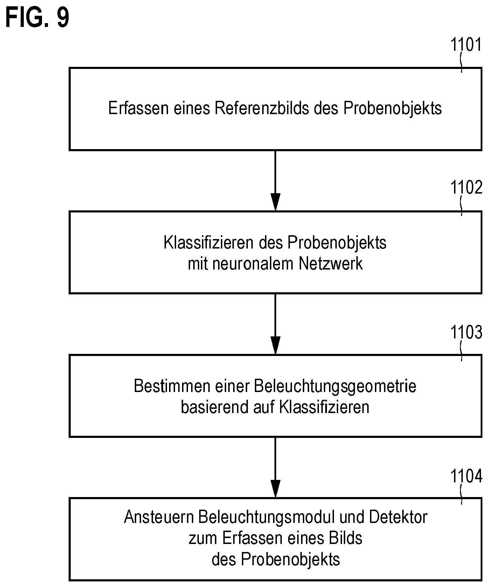

FIG. 9 ist ein Flussdiagramm eines beispielhaften Verfahrens. FIG. 9 illustriert Aspekte in Bezug auf das Bestimmen einer Beleuchtungsgeometrie basierend auf einem KNN.

Solche Techniken zum Bestimmen der Beleuchtungsgeometrie mittels einen KNNs legt die Erkenntnis zugrunde, dass es manchmal erstrebenswert sein kann, eine aufwändige Bestimmung von simulierten Bildern mittels einer Optikübertragungsfunktion wie beispielweise der TCC zu vermeiden.

In dem in FIG. 9 dargestellten Beispiel erlernt ein Algorithmus, dargestellt durch das KNN, den Zusammenhang zwischen einem in einem zuvor erfassten Referenzbild abgebildeten Probenobjekt - 1101 - und einer bevorzugten Beleuchtungsgeometrie. Das künstliche neuronale Netzwerk kann dann basierend auf dem Referenzbild das Probenobjekt klassifizieren -1102 - und anschließend kann eine Beleuchtungsgeometrie basierend auf diesem Klassifizieren bestimmt werden, 1103. Anschließend können ein Beleuchtungsmodul und ein Detektor zum Erfassen eines Bilds des Probenobjekts mit der zuvor bestimmten Beleuchtungsgeometrie angesteuert werden, 1104. Es ist grundsätzlich optional, das Bild des Probenobjekts mittels des Detektors zu erfassen. Alternativ wäre es beispielsweise möglich, dass lediglich die Beleuchtung des Probenobjekts mit der aufgefundenen Beleuchtungsgeometrie und mittels eines geeigneten Beleuchtungsmodul erfolgt, sodass eine Betrachtung durch einen Benutzer, beispielsweise durch ein Okular, ohne Digitalisierung erfolgt.

Beispielsweise kann das Verfahren gemäß FIG. 9 von der Steuerung 115 des optischen Systems 100 ausgeführt werden. Zum Beispiel wäre es möglich, dass das KNN ein CNN umfasst. Solche CNNs eignen sich besonders gut zur Klassifizierung des Probenobjekts anhand der zweidimensionalen Referenzbilder.

Das Modell, welches die Korrelation zwischen Eingang und Ausgang des KNNs darstellt, kann basierend auf maschinellem Lernen trainiert werden. Beispielsweise kann basierend auf Referenz-Beleuchtungsgeometrien für Referenzprobenobjekte das KNN trainiert werden.

Dabei steigt tendenziell die Genauigkeit für eine gegebene Aufgabenstellung mit der Größe des verfügbaren Trainingssatzes. Wird das optische System beispielsweise ausschließlich in metallurgischen Laboren eingesetzt, kann es erstrebenswert sein, das KNN mittels Referenzbildern, die Metallschnitte zeigen, zu trainieren. Im Bereich von Biologielaboren kann es erstrebenswert sein, das KNN basierend auf Dünnschnitten von Zellen zu trainieren. Das KNN kann mit eigenen optimierten Beleuchtungsgeometrien angelernt werden. Beispielsweise können die Referenz-Beleuchtungsgeometrien beim Trainieren basierend auf Techniken, wie sie voranstehend zum Beispiel in Bezug auf die FIGs. 4 und 5 erläutert wurden, bestimmt werden.

In manchen Beispielen kann das KNN eingerichtet sein, um ein Ergebnis in einem kontinuierlich definierten Ergebnisraum bereitzustellen. Dann könnte es möglich sein, dass die Beleuchtungsgeometrie eine im Ergebnisraum des KNNs kontinuierlich definierte Zuordnung zu Beleuchtungsgeometrien umfasst. Dabei kann eine gewisse Diskretisierung in verfügbare Beleuchtungsgeometrien vorgesehen sein, wobei eine Abwägung zwischen Genauigkeit und Strenge der Zuordnung getroffen werden kann.

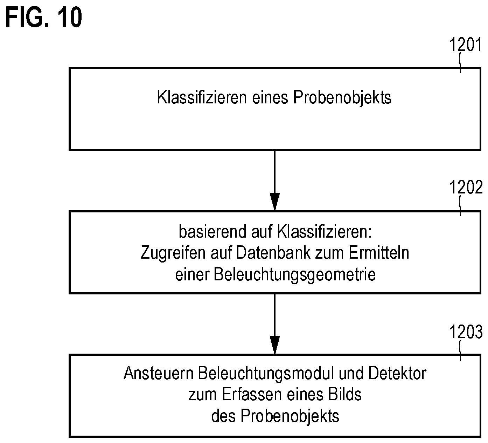

FIG. 10 ist ein Flussdiagramm eines beispielhaften Verfahrens (nicht erfindungsgemäß). Zunächst erfolgt in 1201 ein Klassifizieren des Probenobjekts. Dies kann zum Beispiel manuell erfolgen. Beispielsweise kann ein Typ eines Probenobjekts von einem Benutzer festgelegt werden. Dies kann insbesondere bei wiederkehrenden Charakterisierungsaufgaben mittels des optischen Systems 100 gut möglich sein.

Dann wird in 1202 basierend auf dem Klassifizieren auf eine Datenbank zugegriffen, um eine Beleuchtungsgeometrie zu ermitteln. Die Datenbank kann also Zuordnungen zwischen Klassen von Probenobjekten gemäß dem Klassifizieren in 1201 und als besonders geeignet identifizierten Beleuchtungsgeometrien umfassen. Beispielsweise könnten Einträge in der Datenbank basierend auf den Techniken, die voranstehend in Bezug auf die FIGs. 4 und 5 beschrieben wurden, erstellt werden.

Anschließend wird mindestens ein Beleuchtungsmodul zum Beleuchten des Probenobjekts mit der bestimmten Beleuchtungsgeometrie angesteuert sowie ein Detektor zum Erfassen des Bilds des Probenobjekts, das mit der Beleuchtungsgeometrie assoziiert ist, angesteuert, 1203. Es ist grundsätzlich optional, das Bild des Probenobjekts mittels des Detektors zu erfassen. Alternativ wäre es beispielsweise möglich, dass lediglich die Beleuchtung des Probenobjekts mit der aufgefundenen Beleuchtungsgeometrie und mittels eines geeigneten Beleuchtungsmodul erfolgt, sodass eine Betrachtung durch einen Benutzer, beispielsweise durch ein Okular, ohne Digitalisierung erfolgt.

Zusammenfassend wurden Techniken beschrieben, die es ermöglichen, ein Bild mit Phasenkontrast darzustellen. Solche Techniken können in unterschiedlichen Anwendungsfällen eingesetzt werden. Beispielsweise können solche Techniken eingesetzt werden, wenn der Anwender/die Anwenderin eine direkte Betrachtung des Probenobjekts durch ein Okular beispielsweise eines Mikroskop verwendet. Der Phasenkontrast ist dann direkt sichtbar, beispielsweise ohne die Notwendigkeit weiterer digitale Nachbearbeitung. Ein weiteres Anwendungsgebiet ist betrifft die Darstellung von Phasenkontrast und Objektstrukturen, wenn durch die Abbildungsoptik des optischen Systems Beugungsordnungen reduziert oder unterdrückt werden, die nicht positiv zum Objektkontrast beitragen. Vorteile können beispielsweise der vergrößerte nutzbare Dynamikumfang mithilfe einer bereits vorhandenen Kamera sein, da z.B. nicht mit Informationen ausgestattete Beugungsordnungen nur zu einem Intensitätsoffset beitragen. Weiterhin werden die Informationen mit einem Detektor direkt physikalisch gemessen - und nicht etwa in einem Nachbearbeitungsprozess, wie z.B. der Entfaltung durch bspw. einen Wahrscheinlichkeits-Algorithmus (z.B. Max-Likelihood Ansatz) erst nachträglich hineininterpretiert.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen, verwendet werden, ohne das Gebiet der Erfindung zu verlassen.

Beispielsweise wäre es möglich, die hierin beschriebenen digitalen Techniken zu ergänzen durch Hardware-Merkmale im Zusammenhang mit der konventionellen Phasenkontrast-Bildgebung. Beispielsweise können die hierin beschriebenen Techniken ergänzt werden durch optische Komponenten, wie ein DIC-Prisma oder einen Phasenkontrastring. Dadurch kann der Phasenkontrast gesteigert werden. Das kann sich z.B. in der Weise auswirken, dass der sog. HALO-Effekt, der sich insbesondere manchmal beim Zernike-Phasenkontrast ergibt, wirksam reduziert werden, in dem die Ringblende in der Weise an den Phasenring angepasst wird, dass die nullte, vom Objekt ungebeugte Ordnung nicht zu destruktiver Interferenz führt und Ränder an Objektkanten erzeugt, die die Auswertung der Bilder in der Regel erschwert.

## Patentansprüche

1. Verfahren, das umfasst:
- Erfassen eines Referenzbilds eines Probenobjekts,
- Klassifizieren des Probenobjekts mit einem künstlichen neuronalen Netzwerk basierend auf dem Referenzbild, **gekennzeichnet durch**:
- Bestimmen einer Beleuchtungsgeometrie (300) basierend auf dem Klassifizieren, und
- Ansteuern mindestens eines Beleuchtungsmoduls (111) zum Beleuchten des Probenobjekts mit der bestimmten Beleuchtungsgeometrie (300).

2. Verfahren nach Anspruch 1,
wobei das neuronale Netzwerk ein mehrschichtiges Faltungsnetzwerk umfasst.

3. Verfahren nach Anspruch 1 oder 2,
wobei das Bestimmen der Beleuchtungsgeometrie (300) eine im Ergebnisraum des neuronalen Netzwerks kontinuierlich definierte Zuordnung zu Beleuchtungsgeometrien (300) umfasst.

4. Verfahren nach einem der voranstehenden Ansprüche,
- basierend auf Referenz-Beleuchtungsgeometrien (300) für ReferenzProbenobjekte: Trainieren des neuronalen Netzwerks.

5. Steuerung (115) eines optischen Systems (100), welches ein Beleuchtungsmodul (111) und einen Detektor (114) umfasst, wobei die Steuerung mindestens einen Prozessor umfasst, der eingerichtet ist, um die folgenden Schritte durchzuführen:
- Erfassen eines Referenzbilds eines Probenobjekts,
- Klassifizieren des Probenobjekts mit einem künstlichen neuronalen Netzwerk basierend auf dem Referenzbild, **gekennzeichnet durch**:
- Bestimmen einer Beleuchtungsgeometrie (300) basierend auf dem Klassifizieren, und
- Ansteuern mindestens des Beleuchtungsmoduls zum Beleuchten des Probenobjekts mit der bestimmten Beleuchtungsgeometrie.

## Claims

1. Method, comprising:
- capturing a reference image of a sample object,
- classifying the sample object using an artificial neural network on the basis of the reference image, **characterized by**:
- determining an illumination geometry (300) on the basis of the classification, and
- controlling at least one illumination module (111) for illuminating the sample object using the determined illumination geometry (300).

2. Method according to Claim 1,
wherein the neural network comprises a convolutional neural network.

3. Method according to Claim 1 or 2,
wherein determining the illumination geometry (300) comprises a mapping to illumination geometries (300) that is continuously defined in the output space of the neural network.

4. Method according to any of the preceding claims,
- on the basis of reference illumination geometries (300) for reference sample objects: training the neural network.

5. Controller (115) of an optical system (100) comprising an illumination module (111) and a detector (114), wherein the controller comprises at least one processor configured to perform the following steps:
- capturing a reference image of a sample object,
- classifying the sample object using an artificial neural network on the basis of the reference image, **characterized by**:
- determining an illumination geometry (300) on the basis of the classification, and
- controlling at least the illumination module for illuminating the sample object using the determined illumination geometry.

## Revendications

1. Procédé, comprenant les étapes consistant à :
- acquérir une image de référence d'un objet d'échantillon,
- classer l'objet d'échantillon à l'aide d'un réseau neuronal artificiel sur la base de l'image de référence, **caractérisé par** :
- la détermination d'une géométrie d'éclairage (300) basée sur la classification, et
- la commande d'au moins un module d'éclairage (111) pour éclairer l'objet d'échantillon à l'aide de la géométrie d'éclairage (300) déterminée.

2. Procédé selon la revendication 1,
dans lequel le réseau neuronal comprend un réseau convolutif multicouche.

3. Procédé selon la revendication 1 ou 2,
dans lequel la détermination de la géométrie d'éclairage (300) comprend une association à des géométries d'éclairage (300), définie en continu dans l'espace des possibles du réseau neuronal.

4. Procédé selon l'une des revendications précédentes,
- sur la base des géométries d'éclairage de référence (300) pour des objets d'échantillon de référence : entraînement du réseau neuronal.

5. Commande (115) d'un système optique (100) qui comprend un module d'éclairage (111) et un détecteur (114), la commande comprenant au moins un processeur qui est aménagé pour effectuer les étapes suivantes :
- acquérir une image de référence d'un objet d'échantillon,
- classer l'objet d'échantillon à l'aide d'un réseau neuronal artificiel sur la base de l'image de référence, **caractérisé par** :
- la détermination d'une géométrie d'éclairage (300) basée sur la classification, et
- la commande au moins du module d'éclairage pour éclairer l'objet d'échantillon à l'aide de la géométrie d'éclairage déterminée.
